# EUROPEAN PATENT APPLICATION

(11) **EP 1 624 692 A1**
(43) Date of publication of application: **08.02.2006**
(21) Application number: 05105437.7
(22) Date of filing: 21.06.2005
(51) Int. Cl.: H04N 7/24, H04N 5/00, H04N 7/16

(54) **Forcing an action in a terminal**

(30) Priority: 03.08.2004 EP 04300507
(71) Applicant: Thomson Licensing, 92100 Boulogne Billancourt (FR)
(72) Inventor: Quere, Thierry, 35160 Montfort sur Meu (FR); Fraleu, Sebastien, 35530 Noyal sur Vilaine (FR); Jumpertz, Jean-Luc, 35000 Rennes (FR)
(74) Representative: Ruellan-Lemonnier, Brigitte

(57) **Abstract**

A method for forcing a terminal to perform an action, and a corresponding terminal and public table. A system broadcasts a public table comprising code for the action. The terminal receives the table, and extracts and executes the code. In a preferred embodiment, the system is a MPEG system and the terminal a decoder. The MPEG broadcast system inserts code into a conditional access table or a programme map table and broadcasts it. The action is advantageously a reset of the decoder which, when it is switched on again, automatically makes it download the latest version of applicable code, such as the operating system. An advantage is that the system operator can make the decoder perform actions, such as upgrading to a newer software version without user interaction.

## Description

### FIELD OF THE INVENTION

The present invention relates in general to forcing a terminal to perform an action, in particular to forcing a decoder in a broadcast digital television system to download software.

### BACKGROUND OF THE INVENTION

The term "decoder" as used herein may refer to a decoder physically separate from a receiver, a combined receiver and decoder, such as in a set-top box, or a decoder having additional functions, for example recording devices, displays or web browsers.

A broadcast digital television system provides a service packet, which may comprise not only a bouquet of channels among which a user can choose to subscribe depending on the system provider's offer, but also Pay Per View (PPV) programmes, and different interactive services, such as for example e-mail handling, shopping, games, betting, and so on.

In a broadcast digital television system, particularly of the conditional access kind, the decoder is of paramount importance, since it is the module that controls access to the service packet; a user should only have access to the parts of the service packet that are free or to which he has subscribed. This is important not only because it provides due revenue for the system provider, but also because of issues like parental guidance et cetera.

There are however people who try to access part or the entire service packet fraudulently. In doing so, a hacker often tries to "crack" his decoder, so that it can be used to access at least part of the service packet not subscribed to. Once a hacker has succeeded in doing this, he often spreads his knowledge to other hackers, for example by posting the knowledge on special Internet web sites.

System providers are obviously aware of this and for one thing constantly try to improve the security of the decoder in general and a more secure version of the software in particular. The decoders are then updated with the software via the broadcast network (satellite, cable, earth).

Most, if not all, existing decoders perform an automatic verification of the version of at least part of its software after a power-up, such as when being switched on again after having been put in stand-by mode. The loader software inspects a particular zone in a non-volatile memory to see if an update is necessary. In this zone, the decoder, having detected in the broadcast signal identifiers and versions of software that is broadcast, stores information that a new version of this or that software is to be downloaded and installed. If there is new software to download, the decoder connects to a dedicated frequency, acquires the new version of the software, installs it over the old version of the software, and reboots in order to start the new software.

A problem that arises is that many decoders are never put in stand-by mode, for any number of reasons, such as for example: (1) many users only switch off their television sets, but never their decoders, (2) in certain places, for instance bars and waiting rooms, the decoder is tuned indefinitely to the same programme, and (3) hackers may intentionally keep their decoders from going into the stand-by mode in order to avoid an update of the software to a more secure version.

It is well known in the art to force a decoder to perform an action, such as download applications via the network. WO 01/45387, for example, describes forcing the decoder to take an action, such as change channel, go into standby mode, and, as mentioned, download newer versions of the operating system. To achieve this, the system provider broadcasts an Entitlement Management Message (EMM) that is received by the decoder. The EMM comprises an identifier of the specified action (e.g. changing channel) and necessary parameters (e.g. the channel to change to is channel "X"). Upon reception, the decoder verifies that the EMM emanated from a proper source, extracts the action identifier and parameters, if any. It then calls the appropriate function in order to perform the action. While this way of forcing an action works very well in most situations, it does have its drawbacks. The system provider is obliged to keep lists of commands to ensure that each command on the system end corresponds to the proper command in the decoder. Since the commands are transmitted in the form of an identifier, only predefined commands can be sent and only with predefined types of parameters, which in some instances makes the forcing inflexible.

It is also well known in the art to download applications to decoders. To achieve this, the code is invariably broadcast in private tables in what is known as private sections of the digital flow. However, a pirate can block the access of these private sections to his decoder, which means that downloading code in this manner is relatively easy to circumvent by pirates.

It can therefore be appreciated that there is a need for a flexible solution that provides a way of forcing a decoder to perform one or more actions, in particular downloading new software to the decoder and the subsequent update of the downloaded software. This invention provides such a solution.

### SUMMARY OF THE INVENTION

According to one aspect of the present invention, there is provided a method of forcing a terminal in a digital television system to perform at least one action. The digital television system further comprises a transmission system that transmits a public table with a private descriptor comprising code, which when executed by the terminal will perform the at least one action. The terminal then receives the public table, extracts the code from the private descriptor, and executes the code, thus performing the at least one action.

In this way, a terminal may be made to automatically perform an action, without user intervention.

The public table is advantageously a Programme Map Table (PMT) or a Conditional Access Table (CAT). As will be seen further on, these tables have particularly advantageous properties for use in the method.

It is advantageous that the public table comprises the entire code necessary for the terminal to perform the at least one action. This way, the method is easier to implement as there is only one table for the terminal to treat, and it is also more difficult for a pirate to circumvent the invention.

The terminal may also verify that the table comes from an authorised source before executing the code. This improves security in that it is assured that the code comes from the proper source.

It is further advantageous that the digital television system is a broadcast system. This way, it is easy to force an action in many terminals with a single table.

In a second aspect, the invention extends to a terminal in a digital television system. The terminal that allows the forcing of at least one action comprises a receiver for receiving a public table with a private descriptor comprising code, which when executed by the terminal will perform the at least one action. The terminal also comprises a memory for storing code and a processor for extracting the code from the table, storing the code in the memory, and executing the code.

As detailed hereinbefore with reference to the first aspect of the invention, this allows the terminal to be made to automatically perform an action, without user intervention.

As before, it is advantageous that the terminal's actions are performed on the hardware level.

In a third aspect, the invention extends to a public MPEG table that has a private descriptor comprising code destined to be executed by a terminal in the MPEG system.

The public table allows the method of the first aspect of the invention to be performed.

### BRIEF DESCRIPTION OF THE DRAWINGS

Preferred features of the present invention will now be described, purely by way of example, with reference to the accompanying drawings, in which:
Figure 1 shows the overall architecture of an exemplary digital television system according to the invention;
Figure 2 illustrates an interrelationship between a number of components of an MPEG stream;
Figure 3 illustrates a Decoder Action Table in the form of a Conditional Access Table according to the invention;
Figure 4 illustrates a Decoder Action Table in the form of a Programme Map Table according to the invention; and
Figure 5 is a flowchart of the method according to the invention.

### PREFERRED EMBODIMENT OF THE INVENTION

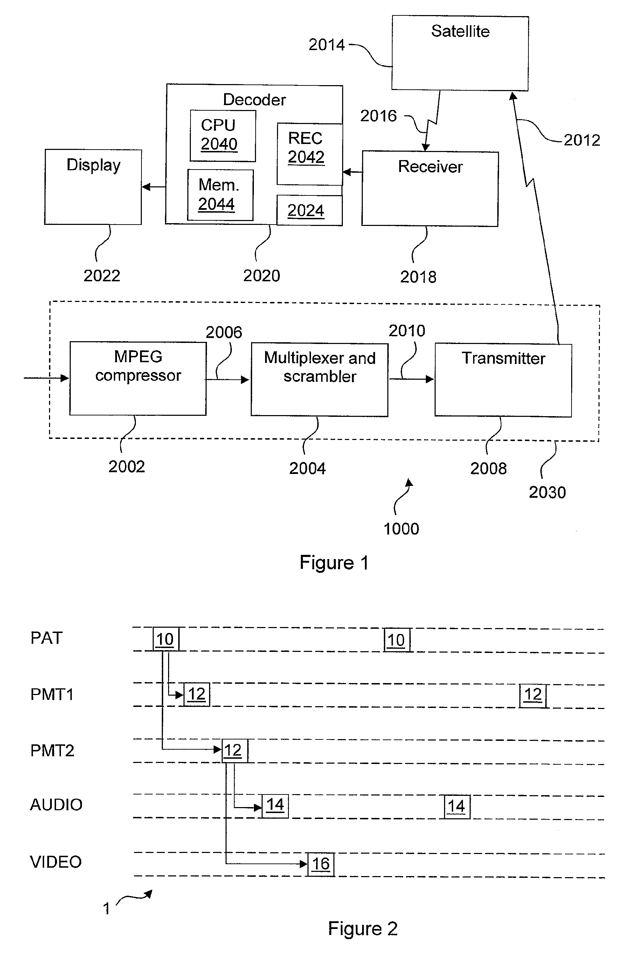

An overview of a digital television system **1000** according to the present invention is shown in **figure 1.** In the preferred embodiment, the mostly conventional digital television system **1000** is a MPEG-2 (Motion Picture Experts Group 2) system, which is well known in the art, modified with the invention as will be seen hereinafter, but a person skilled in the art will appreciate that other kinds of systems, such as for example systems compliant with the Digital Video Broadcasting (DVB) standard, may also be used.

A MPEG-2 compressor **2002** in a transmission system **2030** (also called transmission centre, broadcast centre or broadcast system) receives a digital signal stream (typically a stream of video signals). The compressor **2002** is connected to a multiplexer and scrambler **2004** by linkage **2006**. The multiplexer **2004** receives a plurality of further input signals, assembles one or more transport streams (TSs) and transmits a MPEG-2 bit stream comprising compressed digital signals to a transmitter **2008** of the transmission centre **2030** via linkage **2010,** which naturally can take a wide variety of forms including telecommunications links. The transmitter **2008** transmits electromagnetic signals via uplink **2012** towards a satellite transponder **2014**, where they are electronically processed and broadcast via notional downlink **2016** to earth receiver **2018**, conventionally in the form of a dish owned or rented by the end user. The signals received by receiver **2018** are transmitted to a decoder **2020** owned or rented by the end user and connected to a display **2022**, which often is the end user's television set. The decoder **2020** decodes the compressed MPEG-2 signal into a television signal for the display **2022.**

A security module **2024**, commonly in the form of a smart card, capable of deciphering messages relating to commercial offers (that is, one or several television programmes sold by the broadcast supplier), can be inserted into the decoder **2020.** Using the decoder **2020** and the security module **2024,** the end user may purchase commercial offers in either a subscription mode or a pay-per-view mode. The decoder also comprises a processor (CPU) **2040**, a memory **2044** and an input unit 2042 for receiving signals from the receiver **2018**.

Referring to **figure 2,** a MPEG-2 bit stream 1 includes, as is well known, a programme access table (PAT) **10** having a packet identification (PID) of 0. The PAT contains references to the PIDs of the programme map tables (PMTs) **12** of a number of programmes. Each PMT comprises a reference to the PIDs of the streams of the audio MPEG components **14** and video MPEG components **16** for that programme. Packets having a PID of zero, that is the programme access tables **10**, provide the entry point for all MPEG access.

Apart from the tables listed hereinbefore, there are other kinds of public tables that are or may be broadcast in the digital television system **1000**, such as Conditional Access Tables (CATs), Network Information Tables (NITs), and Service Description Tables (SDTs), Event Information Tables (EITs), Time and Date Tables (TDTs), and Time Offset Tables (TOTs). The PAT, CAT, PMT and NIT are defined in the Program Specific Information (PSI) extension to the MPEG-2 standard, and the SDT, EIT, TOT, and TDT are optional tables defined in the Specification for Service Information (SI) in DVB systems. In addition to the public tables described hereinbefore, there are also private tables, indicated by a private marker in the table, that can be used for virtually anything that the system operator desires. However, being private, these tables are available only within the system and pirates can relatively easily block them, due to their private markers.

When a decoder connects to a digital television service, it monitors the MPEG-2 bit stream and extracts a number of tables from it, notably the PAT, but also other tables that enable it to select audio and video components. Once connected, it continues to extract and analyse these tables to detect any changes in them owing for instance to: appearance/disappearance of a language for audio and/or subtitles, appearance/disappearance of views in a programme, and changes in access rights. It is easy to appreciate that this monitoring is essential for the functioning of any decoder.

According to the invention, in order to make sure that some or all of the active decoders perform one or more actions, such as downloading the latest version of at least part of the software in them if this is necessary, the system provider regularly broadcasts a Decoder Action Table (DAT) through the transmission centre **2030**. The DAT advantageously takes the form of a public table, modified with a private descriptor that comprises executable code, which appears as a string of octets of private data.

The decoder extracts this table and analyses it just like any other table of the kind. The code, preferably a number of consecutive machine language instructions, is extracted and copied into the memory **2044** of the decoder, and executed, either immediately or after a specified delay, although it is conceivable to specify a time at which the action should be performed.

In the case of making sure that the software in a decoder corresponds to the latest version, the code is written to perform the following steps:
■ Compare the version of the decoder's software and hardware with the characteristics or identifiers given in the DAT. In other words, the code verifies if it should force the decoder to download a new version of one or more pieces of software.
■ If new version is to be downloaded, the code updates the zone of the memory **2044** that is inspected by the decoder at start-up to see if it should download and install new code versions, as described hereinbefore, and reboots the decoder by calling a "reset" function or similar.

All public tables to which a private indicator can be added can be used as a DAT, although some public tables are preferred. All the MPEG2 PSI tables mentioned hereinbefore - with the exception of the PAT, to which, according to the standard, a private indicator cannot be added - and some of the SI tables, for example the SDT and the NIT, can be used as a DAT. in the preferred embodiment, however, the PMT and the CAT are chosen over the NIT and the SDT, as the latter are indispensable, and thus acquired by the decoder, only during the installation procedure when the decoder establishes a list of services and programmes available to it, while the former are mandatory and acquired by the decoder at each programme change. The decoder also uses the PMT to manage video, audio and subtitle streams, even without a change of channel.

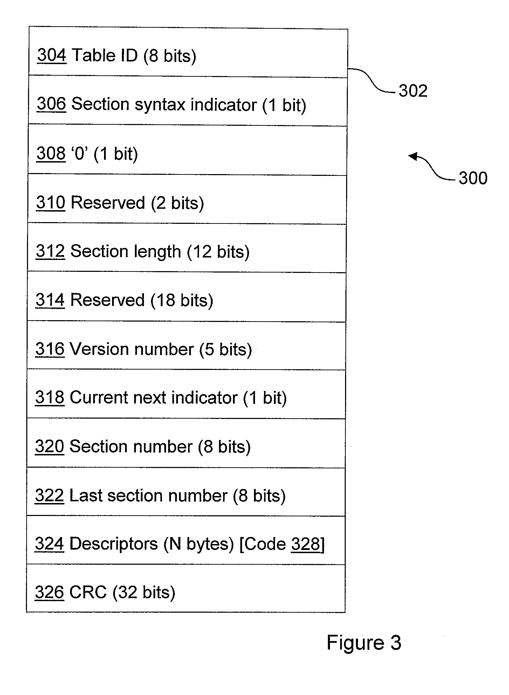

**Figure 3** illustrates a DAT **300** in the form of a CAT **302** (not drawn to scale) according to the invention. As is well known in the art, a standard CAT comprises:
■ 8 bits of table identification **304** that identifies the table. it should be noted here that most tables are broadcast more than once and that the identifier is needed to discern different CATs.
■ 1 bit of section syntax indicator **306,** which is always set to '1'.
■ 1 bit **308** set to zero ('0').
■ 2 bits **310** that are reserved in the standard.
■ 12 bits indicating the section length **312.** The first two bits are set to '00' and the remaining 10 bits specify the number of bytes of the section starting immediately following these 12 bits **312** and including the CRC **326** (see hereinafter).
■ 18 bits **314** that are reserved in the standard.
■ 5 bits providing the version number **316** of the entire CAT **302.**
■ 1 bit of current next indicator **318** that indicates whether the CAT sent is currently applicable or not.
■ 8 bits giving the section number **320.** The section number of the first section in the CAT is '0x00' and it is incremented with each additional section.
■ 8 bits giving the last section number **322,** which specifies the number of the last section of the CAT.
■ N bytes of loop descriptors **324** that for example may comprise programs.
■ 32 bits Cyclic Redundancy Check **326** for error checking purposes.

According to an embodiment of the invention, as will be further described hereinafter, the DAT **300** is created by putting the private descriptor in the CAT in the descriptor loop **324**. It should be noted that the DAT **300** will normally also act as a CAT, i.e. it comprises both the code **328** and the "normal" CAT information.

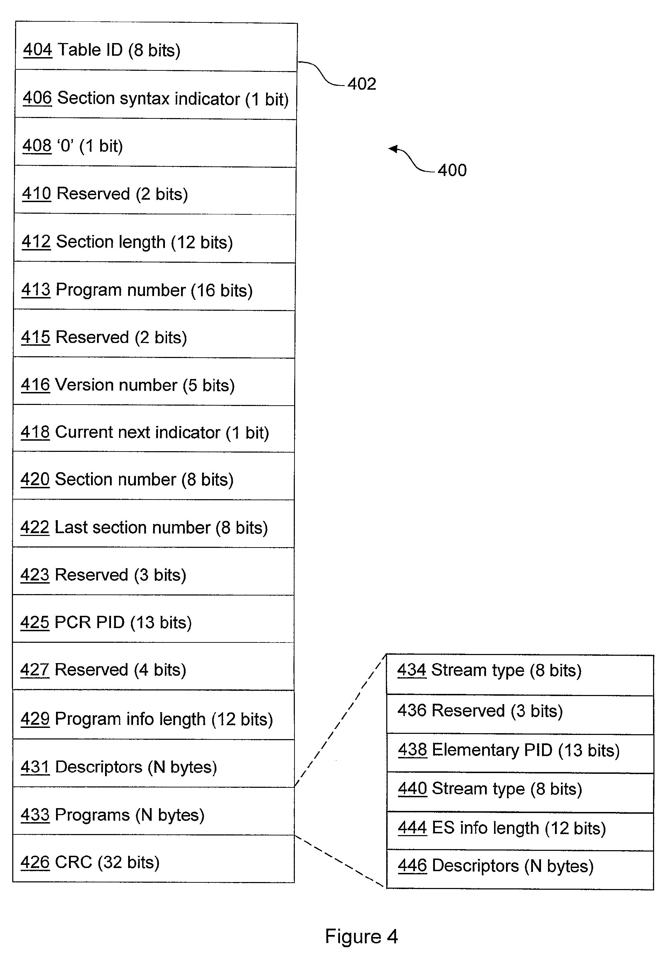

**Figure 4** illustrates a DAT **400** in the form of a PMT **402** (not drawn to scale) according to the invention. As is well known in the art, a standard PMT comprises (the fields that perform the same function as the corresponding field of a CAT - see hereinbefore - will not necessarily be explained again):
■ 8 bits of table identification **404.**
■ 1 bit of section syntax indicator **406.**
■ 1 bit **408** set to zero ('0').
■ 2 bits **410** that are reserved in the standard.
■ 12 bits indicating the section length **412.**
■ 16 bits with the program number **413,** specifying the program to which the program map PID is applicable.
■ 2 bits **415** that are reserved in the standard.
■ 5 bits providing the version number **416.**
■ 1 bit of current next indicator **418.**
■ 8 bits giving the section number **420.**
■ 8 bits giving the last section number **422.**
■ 3 bits **423** that are reserved in the standard.
■ 13 bits of PCR PID **425** that indicate the PID of the packets containing the Program Clock Recovery (PCR) fields for the program specified by the program_number.
■ 4 bits **427** that are reserved in the standard.
■ 12 bits of program info length **429.** The first two bits are '00' and the remaining 10 bits specify the number of bytes of the descriptors immediately following this field.
■ X bytes of loop descriptors **431** that can be used for different purposes.
■ X times N bytes of programs **433,** each comprising:
   o 8 bits of stream type **434**, specifying the type of program in the loop.
   o 3 bits **436** that are reserved in the standard.
   o 13 bits giving the elementary PID **438** of the transport stream packets carrying the associated program element.
   o 4 bits **440** that are reserved in the standard.
   o 12 bits of ES info length **444**. The first two bits are '00' and the remaining 10 bits specify the number of bytes of the descriptors immediately following this field.
   o N bytes of loop descriptors **446** containing the programs themselves.
■ 32 bits Cyclic Redundancy Check **426.**

According to further embodiments of the invention the DAT 400 is created by putting the private descriptor in the PMT either in the program descriptor loop **431,** i.e the first descriptor loop in the PMT, or in the stream descriptor loop (the descriptor loop for each stream) **446.** It should be noted that the DAT **400** will normally also act as a PMT, i.e. it comprises both the code and the "normal" PMT information.

In the MPEG-2/PSI standard, the maximum length for PMTs and CATs is 1024 bytes. Normally, the length of these tables, without the private descriptor according to the invention, do not exceed 200 bytes, which leaves ample room - at least 800 bytes - for the code. This is enough to enable a very wide range of applications for the code.

The choice of where to include the private descriptor - in a CAT, or in the first descriptor loop **431** or in the stream descriptor loop **446** of a PMT - enables the system operator to control when the code will be acquired by a decoder:
■ CAT: the code will be treated when the decoder connects to a frequency corresponding to a TS that broadcasts the CAT. A TS comprises the binary data - video, audio, private, MPEG2 and DVB tables of different programs - broadcasted on the same frequency.
■ PMT (in **431):** the code will be treated when the decoder connects to the service corresponding to the PMT.
■ PMT (in **446):** the code will be treated when the decoder acquires the table corresponding to the component that the PMT is associated with. For example, if the stream descriptors are associated with an audio component, then the code will be treated if the language selected by the user corresponds to that of the PMT.

In the preferred embodiment, the private descriptor takes the following form:
■ Descriptor tag
   8 bits
   This tag is chosen among the user-defined values in MPEG-2/PSI. The value is preferably chosen to be unique, at least at a given time, in the system, and should preferably be chosen so that it does not equal a value already chosen in the system.
■ Descriptor length
   8 bits
   Gives the total length of the descriptor
■ Scrambled mode indicator
   8 bits
   Indicates if and how the data following the indicator has been scrambled. It is also possible to encrypt just the byte code and leave the execution delay information in the clear (see hereinafter)
   A value of 0x00 the data is unscrambled, while values of 0x01-0xFF gives an indication of how the data has been encrypted. The security module **2024** uses this information to select the proper decryption key.
■ Execution delay information
   16 bits
   Indicates the number of minutes between reception of the descriptor and its execution. A value of zero means that the code should be executed immediately.
   The delay may be used to try and make sure that the code is executed at a time deemed likely not to inconvenience the user, such as for example in the middle of the night or between two programmes.
   It should be noted that it may be advantageous to set the delay to zero when forcing the download of new code as this removes the possibility for the user to try and counteract the download once the table has been received by the decoder.
■ Byte code
   N number of bytes
   This part comprises both the data necessary to authenticate the descriptor and the byte code. The authentication data, normally in the form of a certificate or a signature, makes it possible to ascertain that the descriptor comes from an authorised source.

If any part of the private descriptor has been encoded, the scrambled mode indicator and the encrypted data are forwarded to the security module **2024** that decrypts the information using the decryption key indicated by the scrambled mode indicator and returns them to the decoder.

The data, if necessary decrypted, is forwarded to the module of the decoder that is responsible for the verification of the validity of the signature. If the validity is verified, the code is extracted and stored (minus the authentication data) before execution.

It should once more be noted that it is possible to have the decoder execute virtually any combination of assembler instructions.

It is preferable to have the instructions of the code act directly with memory addresses and not via symbols and/or variables, as is the case in for instance the programming language C. To ascertain that a code is compatible with a plurality of software versions (that may use different mappings or memory addresses for a given variable), an embodiment comprises a table stored in a predefined place in the memory **2044** of the decoder. The table contains the addresses for the variables used by the code, defined by the system operator. A person skilled in the art will appreciate that this makes the code more generic. However, in a preferred embodiment, the address of the table is provided as a parameter in the broadcast code. It should be further noted that other parameters can be included in the broadcast code to make it even more portable and versatile, such as for example a table of addresses of functions that can be used by the code (for instance functions for reading/writing in a flash file system.

The decoder according to a preferred embodiment of the invention is mostly a conventional decoder. There are however a few modifications to it:
■ Upon reception, by the receiver of the decoder, of either any kind of table described hereinbefore that can be used with the invention, or of one or more predefined kinds of tables, the decoder according to the invention has a processor **2040** that manages the handling of the tables and analyses any private descriptor therein.
■ If the private descriptor indicates the presence of code, the processor **2040** extracts the code and, if necessary, forwards it to the security module for decryption. The processor **2040** may also verify the validity of a signature before the code (minus the authentication data) is stored in the memory **2044** of the decoder.
■ Unless the execution delay information is set to zero (indicating immediate execution of the code) the processor **2040** either sets a timer or instructs a timer to set with the information to begin the countdown to execution.
■ When the timer times out, the processor **2040** is notified and executes the code.

It is preferred that the decoder extracts and executes the code on the hardware level upon reception of the table, as this make it even more difficult for a pirate to circumvent the invention. If the code is signed, authentication of the code is preferably performed before the code is extracted and executed.

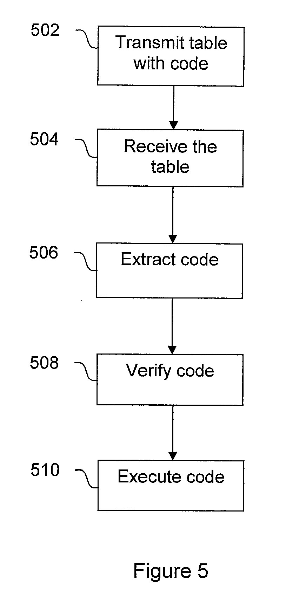

**Figure 5** is a flowchart that illustrates a method of forcing a terminal in a broadcast digital television system to perform at least one action according to the invention. In step **502**, the transmission system in the broadcast digital television system transmits a public table with a private descriptor comprising code, which when executed by the terminal will perform the at least one action. The terminal then receives the public table (step **504**), extracts the code from the private descriptor (step **506**), and executes the code (step **510**), thus performing the at least one action. The terminal may also verify that the public table comes from an authorised source (step **508**) before executing the code.

The description hereinbefore has in most cases made use of forcing the download of software as an example, but a person skilled in the art will appreciate that the invention may be used to have the user perform other actions, such as for example:
■ Configuration parameters, such as the phone number or IP address of a PPP server, can be changed;
■ The channel may be changed automatically, for instance in case of an accident during which poisonous gas leaked into an area, to present information to the subscribers; and
■ A flag putting the decoder into auto-test mode may be switched before the decoder leaves the factory.

It will be understood that the present invention has been described purely by way of example, and modifications of detail can be made without departing from the scope of the invention.

Each feature disclosed in the description and (where appropriate) the claims and drawings may be provided independently or in any appropriate combination. Features described as being implemented in hardware may also be implemented in software, and vice versa.

The number N herein is used simply to denote that a value is variable; it should not be taken to understand that two or more Ns share the same value, except when they clearly refer to the same item.

Reference numerals appearing in the claims are by way of illustration only and shall have no limiting effect on the scope of the claims.

## Claims

1. A method of forcing a terminal (2020) in a digital television system (1000) to perform at least one action, the digital television system (1000) further comprising a transmission system (2030), and the method comprising the steps of:
at the transmission system:
transmitting a public table (300; 400) with a private descriptor (324; 431; 446) comprising code (328), which when executed by the terminal (2020) will perform the at least one action; and
at the terminal (2020):
receiving the public table (300; 400);
extracting the code (328) from the private descriptor (324; 431; 446); and
executing the code (328).

2. The method of claim 1, further **characterised in that** the public table is a Programme Map Table (PMT) (300) or a Conditional Access Table (CAT) (400).

3. The method of claim 1, further **characterised in that** the public table (300; 400) comprises the entire code necessary for the terminal to perform the at least one action.

4. The method of claim 1, further **characterised in that** the terminal (2020) verifies that the public table (300; 400) comes from an authorised source (2030) before executing the code (328).

5. The method of claim 1, further **characterised in that** the digital television system (1000) is a broadcast digital television system.

6. A terminal (2020) in a digital television system (1000), the terminal (2020) allowing the forcing of at least one action, and comprising:
a receiver (2042) for receiving a public table (300; 400) with a private descriptor (324; 431; 446) comprising code (328), which when executed by the terminal (2020) will perform the at least one action;
a memory (2044) for storing code; and
a processor (2040) for:
extracting the code (328) from the public table (300; 400);
storing the code (328) in the memory (2044); and
executing the code (328).

7. The terminal of claim 6, further **characterised in that** the actions are performed on the hardware level.

8. A public MPEG table (300; 400), **characterised in that** it has a private descriptor (324; 431; 446) comprising code (328) destined to be executed by a terminal (2020) in the MPEG system (1000).
